# EUROPEAN PATENT APPLICATION

(11) **EP 2 889 347 A1**
(43) Date of publication of application: **01.07.2015**
(21) Application number: 14200437.3
(22) Date of filing: 29.12.2014
(51) Int. Cl.: C09J 4/06, C08G 63/18, C08G 63/183, C09J 167/02, C09J 167/03

(54) **Polyester adhesive**

(30) Priority: 31.12.2013 US 201361922263 P; 23.12.2014 US 201414581372
(71) Applicant: Armstrong World Industries, Inc., Lancaster, Pennsylvania 17603 (US)
(72) Inventor: Tian, Dong, Lancaster, PA Pennsylvania 17601 (US); Leininger, Larry W., Akron, PA Pennsylvania 17501 (US)
(74) Representative: Jenkins, Peter David

(57) **Abstract**

The present invention provides a radiation-curable pressure sensitive adhesive composition. The adhesive composition can be used as a pressure sensitive adhesive. In addition, the pressure sensitive adhesive can be used as a radiation-curable permanent adhesive composition.

## Description

This application claims the priority of U.S. Provisional Patent Application No. 61/922,263, filed December 31, 2013, entitled "Polyester Adhesive," the entirety of which is incorporated herein by reference. This application also claims the priority of U.S. Non-provisional Patent Application No. 14/581,372, filed December 23, 2014, entitled "Polyester Adhesive," the entirety of which is incorporated herein by reference.

### FIELD OF THE INVENTION

The present invention relates to an adhesive composition.

### BACKGROUND

Pressure sensitive adhesives (PSA) are materials that form a bond with very light pressure. The adhesive is neither solid nor liquid, but rather is a viscoelastic material that is tacky. Most pressure sensitive adhesives are hot melt compositions or water-based emulsion acrylic systems. UV curable pressure sensitive adhesives represent only a small segment of the market, in large part because of the problem with their historical poor high temperature properties. In certain applications of a PSA, it is desirable to have a PSA that can be further processed to form a permanent bond.

An improved adhesive that provides PSA properties and then can be further processed to provide a permanent adhesive bond is desired.

### SUMMARY

In some embodiments, the present invention provides a pressure sensitive adhesive comprising: a saturated amorphous polyester, a mono-functional acrylate, and a photoinitiator. The saturated amorphous polyester comprises a reaction product of a linear aliphatic diol and a mixture of acid components. The acid components comprise an aliphatic component and an aromatic component. The aliphatic component comprises an aliphatic dicarboxylic acid, and the aromatic component comprises an aromatic dicarboxylic acid or an anhydride thereof. The aliphatic dicarboxylic acid and the aromatic dicarboxylic acid or anhydride are present in a weight ratio that ranges from about 1:1 to about 1:10.

In some embodiments, the present invention provides a pressure sensitive adhesive composition comprising: an amorphous acid-terminated polyester, a mono-functional acrylate compound, and a photoinitiator. The mono-functional acrylate compound and the amorphous acid-terminated polyester are present in a weight ratio that ranges from about 1:1 to about 1:9.

In some embodiments, the present invention provides a process for forming a laminate structure comprising: applying a composition to a first layer, the composition comprising: a polyester, an acrylate functional compound, and a photoinitiator. The process further comprises exposing the composition to a first UV radiation, causing the composition to become a pressure sensitive adhesive, laminating a second layer to the first layer and the pressure sensitive adhesive, forming a laminate structure; and exposing the laminate structure to a second UV radiation, fully curing the pressure sensitive adhesive and permanently bonding the second layer to the substrate.

### DETAILED DESCRIPTION

The present invention provides a radiation-curable adhesive composition that can be selectively cured to provide a PSA function and then further cured to provide a permanent adhesive function. According to some embodiments of the present invention, suitable radiation-curable adhesive compositions include an amorphous polyester, a mono-functional acrylate compound, and a photoinitiator.

According to some embodiments of the present invention, the polyester is an amorphous polyester having a glass transition temperature (Tg) of about 30°C or less. The term "about" with reference to temperature allows for variance of +/-1°C. In some embodiments, the polyester Tg may be about 25°C or less. In some embodiments, the polyester Tg may be about 3°C or less. In some embodiments, the polyester Tg may be about -9°C or less. In some embodiments, the polyester Tg may be about -10°C or less. In some embodiments, the polyester Tg may be about -22°C or less.

The polyester of the present invention may be prepared by prepared by esterification of hydroxyl-functional compounds with acid components that include carboxylic acid functional compounds. In some embodiments, the carboxylic acid functional compounds are present in a stoichiometric excess relative to the hydroxyl-functional compounds. The stoichiometric excess of carboxylic acid groups ensures that all free hydroxyl groups in are consumed during esterification and the resulting in the polyester is acid-terminated.

The hydroxyl-functional compound and the carboxylic acid functional compound are esterified in the presence of an esterification catalyst. Any esterification catalyst, such as dibutyl tin oxide, tetraisopropyl titanate, dihydroxy butyl tin chloride, triphenyl tin chloride, triphenyl tin acetate, or butylstannoic acid can be used. In some embodiments butylstannoic acid is used. The hydroxyl-functional compounds and the carboxylic acid functional compounds are mixed thoroughly and gradually heated to, for example, 200 to 250°C to produce the polyester. Vacuum may be applied to the esterification reaction to build molecular weight of the polyester.

The resulting polyester is thermoplastic and preferably has a number average molecular weight (Mn) of at least 5,000. In some embodiments, the polyester has a molecular weight (Mn) of at least 10,000. The term "thermoplastic" means a polymer that softens when exposed to heat and returns to its original condition when cooled to room temperature, as compared to thermoset polymers that irreversibly sets when heated.

Suitable hydroxyl-functional compounds have a functionality of two - i.e. diol - and include aliphatic diol, aromatic diol, and mixtures thereof. Suitable aliphatic diols include acyclic (linear) aliphatic diols such as ethylene glycol, diethylene glycol, triethylene glycol, tetraethylene glycol, 1,3-propanediol, methyl ethyl glycol, 1,4-butanediol, 1,3-butanediol, 1,2-butanediol, 1-5-pentanediol, 2-methyl-1,3-propanediol, and mixtures thereof. Suitable aromatic diol includes bisphenol A, resorcinol, and mixtures thereof. Of these, particularly suitable are linear aliphatic diols including 1,3-propanediol, 1,4-butanediol, 1,3-butanediol, 1,5-pentanediol, and mixtures thereof. In some embodiments, the polyester according to the present invention may be produced additionally including up to 0.05 wt.% of triol, such as glycerin.

The hydroxyl-functional compounds of the present invention are saturated. The term saturated refers to compounds that may contain C=C double bonds in the form of aromatic groups, however, the term saturated excludes compounds that contain C=C double bonds that are capable of participating in ethylenically unsaturated addition reactions - such as polymerization or crosslinking. Examples of C=C double bonds that are capable of such ethylenic unsaturated addition reactions include vinyl, acrylate, allyl, methylene, and alkene groups.

Suitable carboxylic acid functional compounds have a functionality of two - i.e. dicarboxylic acids - and include aromatic dicarboxylic acid, aliphatic dicarboxylic acid, anhydrides thereof, and mixtures thereof. Suitable aromatic dicarboxylic acids and anhydrides thereof include terephthalic acid, isophthalic acid, phthalic acid, their anhydrides, and mixtures thereof. Suitable aliphatic dicarboxylic acids include oxalic acid, malonic acid, succinic acid, gluatric acid, adipic acid, pimelic acid, suberic acid, azelaic acid, sebacic acid, poly (azelaic anhydride), and mixtures thereof. The carboxylic acid functional compounds are saturated, as defined previously with respect to the hydroxyl functional compounds.

According to some embodiments, using diols and dicarboxylic acids (as well as their anhydrides) results in the polyester having a linear backbone - i.e. non-branched polyester. As previously discussed, the polyester may further comprise up to 0.05 wt.% of the triol and still constitute a linear polymer because up to 0.05 wt.% of triol constitutes such a minor amount of tri-functional compound that the resulting polymer would not create a branched polymer. In some embodiments, the polyester of the present invention is saturated, as defined previously with respect to the hydroxyl functional compounds.

The saturated amorphous polyester comprises a reaction product of a linear aliphatic diol and a mixture of acid components. The acid components comprise an aliphatic component and an aromatic component. The aliphatic component comprises an aliphatic dicarboxylic acid, and the aromatic component comprises an aromatic dicarboxylic acid or an anhydride thereof. In some embodiments, the aliphatic dicarboxylic acid, and the aromatic dicarboxylic acid or anhydride are present in a weight ratio that ranges from about 1:1 to about 1:10, preferably from about 1:2 to about 1:8.

In some embodiments, the acrylate compound of the present invention has an acrylate functionality of one (1). It has been discovered that using acrylate compounds with a functionality of two (2) or more may not produce a desirable pressure sensitive adhesive after UV curing. Rather, the partially cured compositions using acrylate compounds having a functionality of two (2) or more may not exhibit a desirable level of adhesive tackiness. In some embodiments, the radiation-curable adhesive composition of the present invention is substantially free of acrylate compounds having an acrylate functionality of two (2) or more.

Acrylate compounds suitable for the invention include acrylic acid, methacrylic acid, ethyl acrylic acid, 2-phenoxyethyl acrylate; 2-phenoxyethyl methylacrylate; 2-phenoxyethyl ethylacrylate; tridecryl acrylate; tridecryl methylacrylate; tridecryl ethylacrylate; alkoxylated tetrahydrofurfuryl acrylate; alkoxylated tetrahydrofurfuryl methylacrylate; alkoxylated tetrahydrofurfuryl ethylacrylate; alkoxylated phenol acrylate; alkoxylated phenol methylacrylate; alkoxylated phenol ethylacrylate; alkoxylated nonylphenol acrylate; alkoxylated nonylphenol methylacrylate; alkoxylated nonylphenol ethylacrylate, and mixtures thereof.

According to some embodiments of the present invention, the acrylate compound is an alkoxylated acrylate compound. The alkoxylated acrylate compound may be ethloxylated and/or propoxylated. In some embodiments, the acrylate compound is ethoxylated with ethylene oxide (EO) at a degree of alkoxylation ranging from about 2 to about 5. In some embodiments the degree of alkoxylation of EO ranges from about 3 to 4. In some embodiments the degree of alkoxylation of EO is 3. In some embodiments the degree of alkoxylation is 4. In some embodiments, the acrylate compound is propoxylated with propylene oxide (PO) at a degree of alkoxylation ranging from about 2 to about 5. In some embodiments the degree of alkoxylation of PO ranges from about 3 to 4. In some embodiments the degree of alkoxylation of PO is 3. In some embodiments the degree of alkoxylation of PO is 4. In some embodiments, the acrylate compound is alkoxylated with a 1:1 stoichiometric mixture of EO / PO.

According to some embodiments of the present invention, the acrylate compound is present in a weight ratio of polyester to acrylate compound that ranges from about 1:1 to about 1:9. In some embodiments of the weight ratio of polyester to acrylate compound ranges from about 1:4 to about 1:9. According to some embodiments the radiation-curable adhesive composition comprises between about 80 wt.% and about 95 wt.% of the polyester and the acrylate compound; alternatively, the radiation-curable adhesive composition comprises between about 85 wt.% and about 93 wt.% of the polyester and the acrylate compound. In one embodiment, the radiation-curable adhesive composition comprises between about 90 wt.% of the polyester and the acrylate compound. In one embodiment, the radiation-curable adhesive composition comprises between about 93 wt.% of the polyester and the acrylate compound

The radiation curable adhesive composition of the present invention further comprises photoinitiators that facilitate UV curing. The suitable photoinitators of the present invention include a benzoin compound, an acetophenone compound, an acylphosphine oxide compound, a titanocene compound, a thioxanthone compound or a peroxide compound, or a photosensitizer such as an amine or a quinone. Specific examples photoinitiatiors include 1-hydroxycyclohexyl phenyl ketone, benzoin, benzoin methyl ether, benzoin ethyl ether, benzoin isopropyl ether, benzyl diphenyl sulfide, tetramethylthiuram monosulfide, azobisisobutyronitrile, dibenzyl, diacetyl and beta-chloroanthraquinone. In some embodiments, the photoinitators are water soluble alkylphenone photoinitiators.

The photoinitiator may be added in an amount of 0.05 to 15 parts by weight of the radiation curable adhesive composition, still preferably 0.1 to 10 parts by weight, and optimally 0.5 to 5 parts by weight, to 100 parts by weight of the radiation-curable adhesive composition.

The radiation-curable adhesive composition may further include an amine synergist, such as diethylaminoethyle methacrylate, dimethylaminoethyl methacrylate, N-N-bis(2-hydroxyethyl)-P-toluidine, Ethyl-4-dimethylamino benzoate, 2-Ethylhexyl 4-dimethylamino benzoate, as well as commercially available amine synergist, including Sartomer CN 371. The amine synergist may be present in the radiation curable adhesive composition by an amount ranging from about 1 wt.% to about 3 wt.%, preferably 2.87 wt.%.

The radiation-curable adhesive composition may further include a surfactant. Suitable surfactants of the present invention include, but are not limited to, fluorinated alkyl esters, polyether modified polydimethylsiloxanes and fluorosurfactants, having the formula R_{f}CH₂CH₂O(CH₂CH₂O)ₓH, wherein R_{f}=F(CF₂CF₂)_{y}, x=0 to about 15, and y=1 to about 7. The surfactant may be present in the radiation curable adhesive composition by an amount ranging from about 0.5 wt.% to about 2 wt.%, preferably about 0.78 wt.%.

In some embodiments, the radiation-curable adhesive composition may further comprise other additives such as pigments, tackifiers, surfactant, fillers such as glass or polymeric bubbles or beads (which may be expanded or unexpanded), hydrophobic or hydrophilic silica, calcium carbonate, glass or synthetic fibers, blowing agents, toughening agents, reinforcing agents, fire retardants, antioxidants, and stabilizers. The additives are added in amounts sufficient to obtain the desired end properties.

According to some embodiments, the radiation curable adhesive composition of the present invention is produced by combining acrylate functional compound, photoinitiator, amine synergist, and surfactant and mixing at room temperature (ranging from about 20°C to about 25°C), thereby creating a premix. Once the photoinitiator is dissolved in the premix, the polyester is added to the premix at a temperature ranging from about room temperature to about 45°C with high speed agitation, thereby creating the radiation curable adhesive composition at 100% solids. Once the polyester is dissolved in the adhesive mixture, the viscosity of the adhesive mixture is measured at 25°C using a #6 spindle at 100 rpm at 100% solids. The radiation curable adhesive mixture is a liquid at room temperature at 100% solids.

According to one embodiment, the radiation curable adhesive composition of the present invention is then applied directly (by roller coating, spray coating, or another suitable method) onto a first layer. The adhesive mixture may be applied as a continuous or noncontinuous coating. According to one embodiment, the radiation curable adhesive composition is applied to a thickness of about 2 mils; however, any suitable application thickness may be used to provide satisfactory bonding strength.

The first layer and radiation curable adhesive composition is then passed under an artificial UV light source in a first partial UV curing step creating the PSA. The first partial UV curing step occurs for a first period of time and at a power level that is sufficient to only partially cure the acrylate compounds present in the radiation curable adhesive composition to the point where the radiation curable adhesive composition exhibits an adherence that is tacky and pressure sensitive such that a second layer will readily stick to the partially cured radiation curable adhesive composition. Suitable UV light sources include broad spectrum UV lamps, such as mercury-arc UV lamp, and a narrow spectrum UV source, such as UVV LED.

In one non-limiting embodiment, the radiation curable composition is partially cured with a broad spectrum UV lamp that provides: UVA radiation, UVB radiation, UVC radiation, and UVV radiation. The term "about" with respect to J/cm² means +/- 1 hundredth. Suitable UVA radiation ranges from about 0.4 J/cm² to about 1.1 J/cm², alternatively from about 0.5 J/cm² to about 1.0 J/cm². Suitable UVB radiation ranges from about 0.3 J/cm² to about 0.9 J/cm²; alternatively from about 0.4 J/cm² to about 0.8 J/cm². Suitable UVC radiation ranges from about 0.06 J/cm² to about 0.2 J/cm²; alternatively from about 0.08 J/cm² to about 0.16 J/cm². Suitable UVV radiation ranges from about 0.2 J/cm² to about 0.5 J/cm²; alternatively from about 0.3 J/cm² to about 0.4 J/cm².

In one embodiment, UVA radiation is about 1.04 J/cm²; UVB radiation is about 0.86 J/cm²; UVC radiation is about 0.16 J/cm²; and UVV radiation is about 0.44 J/cm². In one embodiment, UVA radiation is about 1.01 J/cm²; UVB radiation is about 0.84 J/cm²; UVC radiation is about 0.16 J/cm²; and UVV radiation is about 0.44 J/cm². In another embodiment, UVA radiation is about 0.51 J/cm²; UVB radiation is about 0.42 J/cm²; UVC radiation is about 0.08 J/cm²; and UVV radiation is about 0.21 J/cm².

After partial curing, a second layer is applied and positioned onto the PSA partially cured radiation curable adhesive composition on the first layer for lamination. The pressure sensitive nature of the partially cured radiation curable adhesive composition allows the second layer to be properly positioned on the first layer - including removal of the first layer if the initial positioning of the second layer is incorrect relative to the first layer. Once the desire positioning of the second layer is achieved relative to the first layer, the first and second layers are laminated together.

In one embodiment, the lamination may be performed in a roll-type laminator comprising a spaced apart pair of rotating rolls or cylinders defining a gap between them through which the first layer, radiation curable adhesive composition, and second layer laminate passes. The gap is sized to sufficiently apply pressure and laminate the first layer and the second layer together.

In one embodiment, the first layer and the second layer are each heated before the foregoing lamination step. Heating of the first and second layers may improve bonding of the first and second layers through the laminator or calender. The first layer may be heated to a temperature between about 70 °C to about 90 °C immediately before lamination.

According to some embodiments of the present invention, the first layer is a substrate, for example a linoleum or polyvinyl chloride (PVC) substrate. In other embodiments, the first layer may be a wood plank, or a high or medium density fiber board. According to some embodiments of the present invention, the second layer may be a wear layer comprised of polyethylene terephthalate (PET), polyethylene terephthalate glycol-modified (PETG) or PVC. The PETG wear layer may be somewhat semi-rigid in structure due to the nature of PETG, therefore, heating the wear layer advantageously increases its flexibility and allows it to more readily conform to the first layer during the laminating process to improve handling and lamination results.

Following the lamination, a second full UV curing step is performed wherein the laminate structure is passed under a UV light source for a second period of time sufficient to fully cure the PSA radiation curable adhesive composition, thereby permanently bonding together the second layer and the first layer.

In one embodiment, the PSA pressure sensitive radiation curable adhesive composition can be cured with the same radiation sources discussed with respect to the first partial cure creating the PSA. A UVA light source having a longer wavelength than used in the first UV treatment may be used to provide sufficient penetration through the second layer to properly cure the radiation curable adhesive composition and bond the second layer to the first layer. The intensity and duration of the final UV treatment can be adjusted to ensure that the curable adhesive composition between the first and second layers are substantially fully cured or crosslinked to permanently bond the first and second layers.

A third layer may next be formed on the second layer for added protection and durability. The third layer can be formed from a UV curable top coat composition available in the art for example as disclosed in U.S. Pat. No. 6,916,547. The protective layer composition can be applied on top of the second layer after the second layer is laminated, but before the laminate with the second layer is subjected to the second UV treatment such that the radiation curable adhesive composition and the third layer can be simultaneously cured during the second UV treatment process.

The laminate comprising the first, second, and/or third layer may have any suitable overall thickness. Representative non-limiting thicknesses for linoleum flooring or tiles may range generally from about 2.5 mm - 3.2 mm in some embodiments.

The radiation-curable adhesive composition can be used in many different applications that benefit from a pressure sensitive adhesive composition that can be further processed to provide a permanent bond. An exemplary use of the radiation-curable adhesive composition include an adhesive for flooring products, such as flooring tiles, planks and sheets. Such flooring products include linoleum, vinyl tiles, composite tiles and the like. The laminate comprising the first, second, and/or third layer may be useful in flooring applications, such as linoleum flooring sheets or tiles.

The invention will be described in greater detail by way of specific examples. The following examples are offered for illustrative purposes and are not intended to limit the invention in any manner.

### Examples

### Example 1

Described below in Table 1 is an exemplary polyester used to make the radiation curable adhesive composition of the present invention.

**Table 1**

| **Ingredients** | **Wt. %** |
|---|---|
| Terephthalic acid | 13.3 |
| Isophthalic acid | 19.9 |
| Phthalic anhydride | 11.9 |
| Sebacic acid | 24.3 |
| 1,3-propanediol | 30.1 |
| Glycerin | 0.05 |
| Fastcat 4100 (catalyst) | 0.001 |

| | |
|---|---|
| Fastcat 4100: butyl stannoic acid | |

1,3-propanediol and glycerin are charged in a reaction vessel while sparging with nitrogen gas and stirred. The reactants are heated to 80°C. Terephthalic acid, isophthalic acid, phthalic anhydride, sebacic acid and the catalyst are charged into the vessel, while being stirred. The mixture is gradually heated to 240°C over twelve hours while collecting he water of reaction distillate. The heated reaction mixture is held at 240°C for seven hours to achieve an acid number less than 5. Vacuum is slowly applied while maintaining the temperature. The maximum vacuum level is 20 mm Hg. The vacuum is terminated when the reaction mixture reaches a viscosity between 350 and 450 poise at 169°C, as measured using a Brookfield cone and plate viscometer.

### Example 2

The resulting polyester from Example 1 is blended with a premix of an acrylate compound, an amine synergist, a surfactant, and a photoinitiator. The premix is created by blending the acrylate compound, amine synergist, surfactant, and photoinitiator at room temperature with high speed agitation. Conventional amine synergists, surfactants and photoinitiator suitable for U.V. curable adhesive composition can be used. The polyester is blended with the premix until the polyester is dissolved.

The resulting mixture is spread out as a thin layer, up to 4 mils, and is cured with a standard mercury arc lamp with a total UVA energy of 0.5 J/cm². The resulting composition exhibits PSA properties. Table 2 demonstrates the radiation curable adhesive composition of Example 2.

The following information is to be used in evaluating Table 2 and Table 3

Amine synergist: Sartomer CN 371 (amine co-initiator)

Surfactant: BYK-UV 3530 (polyether modified acryl functional polydimethylsiloxane)

Photoinitiator: mixture of 80 wt. % diphenyl ketone and 20 wt.% 1-hydro-xycyclohexyl phenyl ketone

Partial Cure 1 uses the following radiation energy:
UVA: about 1.04 J/cm²
UVB: about 0.86 J/cm²
UVC: about 0.16 J/cm²
UVV: about 0.44 J/cm²

Partial Cure 2 uses the following radiation energy:
UVA: about 1.01 J/cm²
UVB: about 0.84 J/cm²
UVC: about 0.16 J/cm²
UVV: about 0.44 J/cm²

Partial Cure 3 uses the following radiation energy:
UVA: about 0.51 J/cm²
UVB: about 0.42 J/cm²
UVC: about 0.08 J/cm²
UVV: about 0.22 J/cm²

The term "about" with respect to UVA, UVB, UVC, and UVV values means +/-1 hundredth.

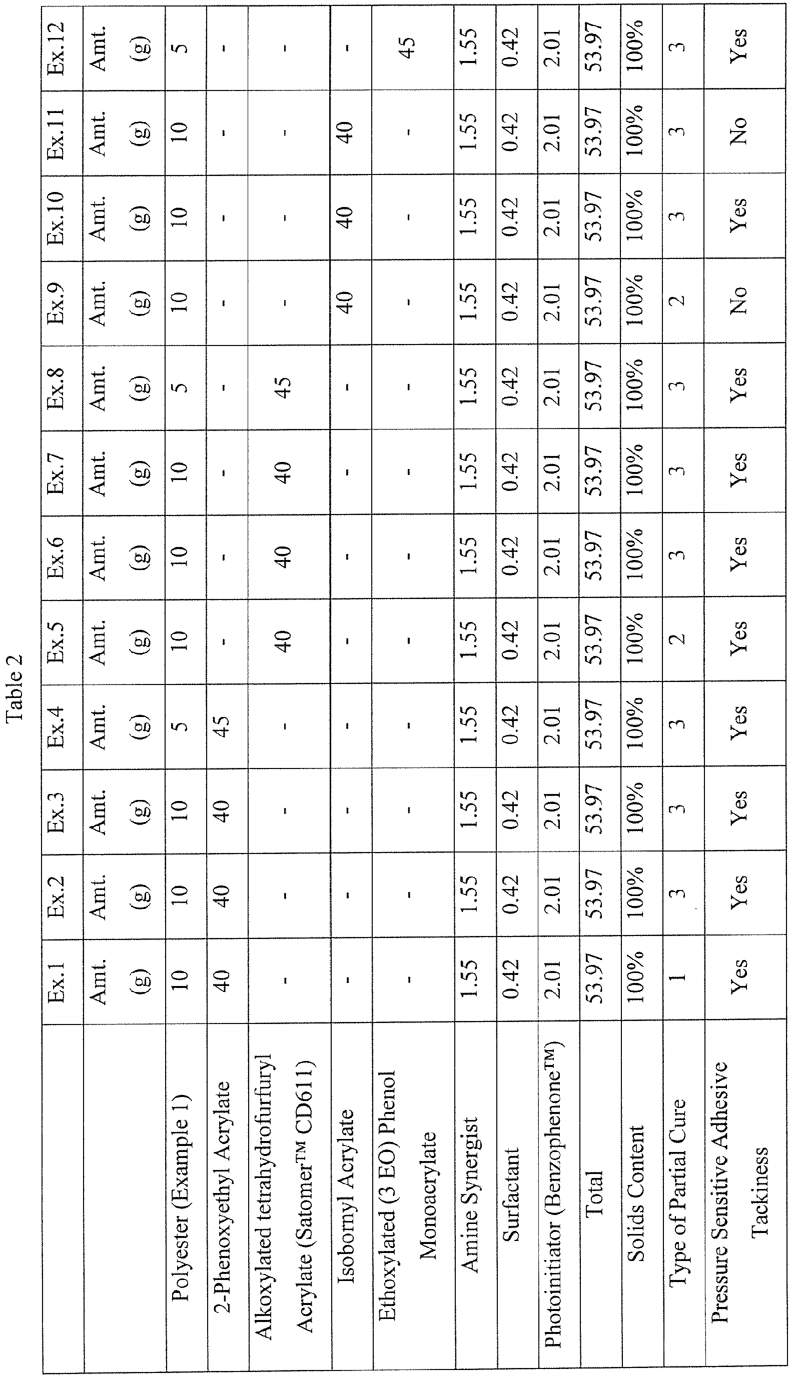

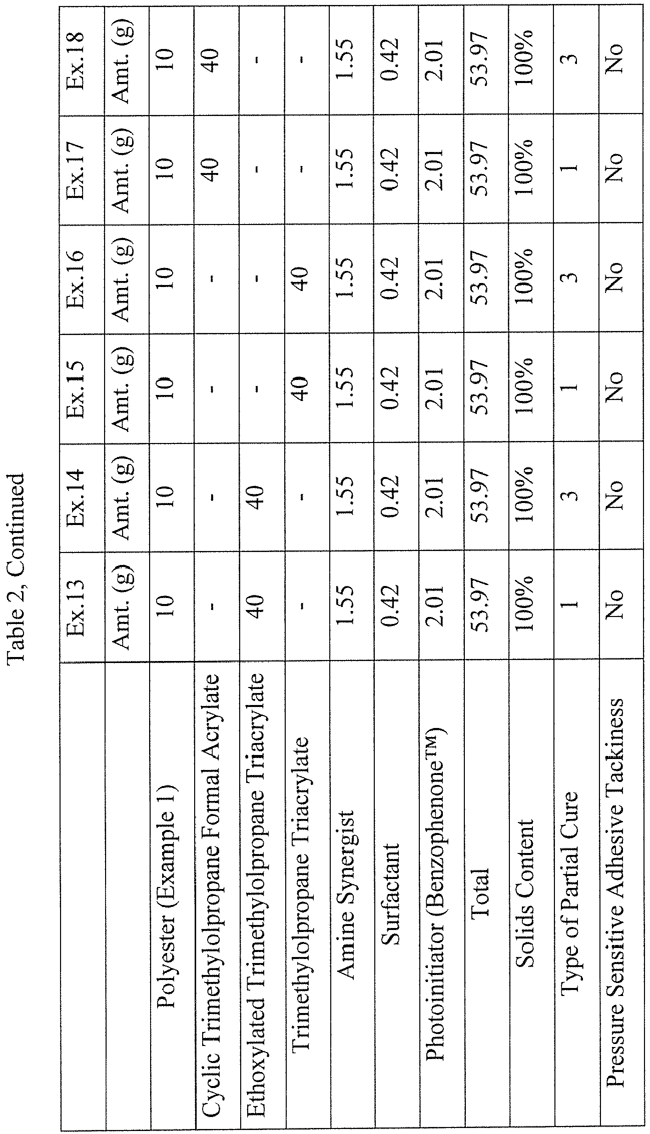

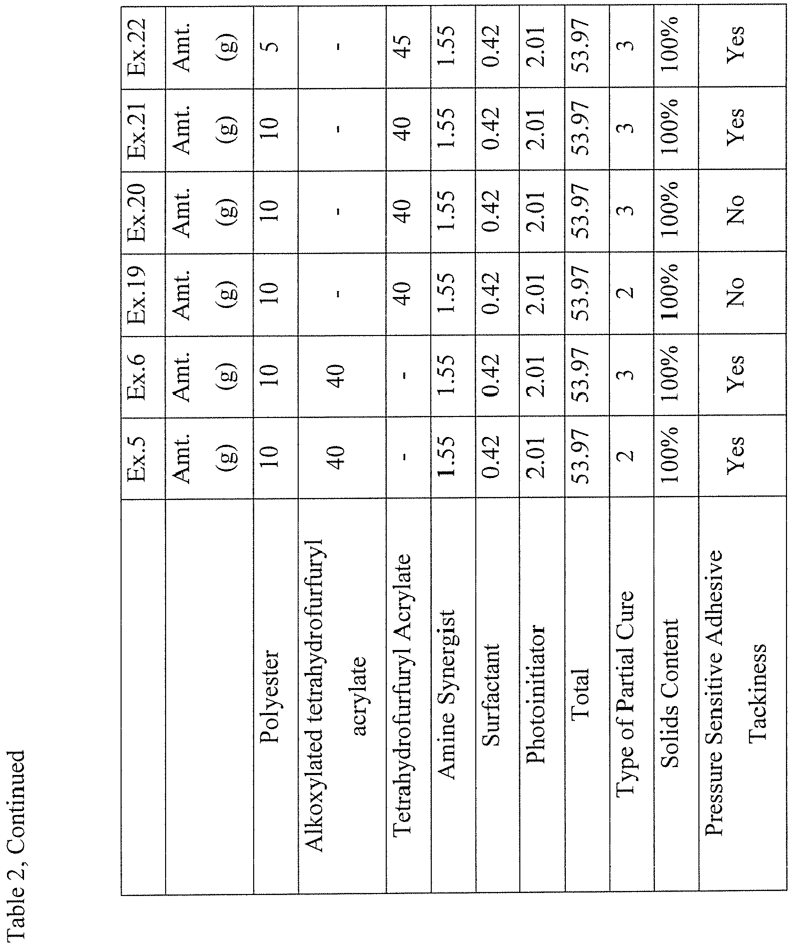

The pressure sensitive radiation curable adhesive is then adhesive is further cured with UVA energy ranging from about 0.5 J/cm² to about 1.04 J/cm² resulting in a fully cured strong bonding adhesive. The adhesive composition is used to produce a laminate of a linoleum tile and a PETG protective film layer. The PSA properties of the adhesive assist the placement of the PETG protective film layer by securely adhering the two layers such that the laminate can be further processed to form a permanent bond, e.g., by exposing the laminate in a UV-curing station.

In addition to showing that mixtures of mono-functional acrylate compounds with polyester create a radiation curable PSA composition, the data further demonstrates that using acrylate-functional compounds having an acrylate functionality greater than two (2) yields radiation curable compositions that exhibit poor PSA performance after partial curing. The data provided further demonstrates that certain mono-functional acrylate compounds exhibit inconsistent PSA performance - for example isobornyl acrylate and tetrahydrofurfuryl acrylate. However, it has been further discovered that the consistency of tetrahydrofurfuryl acrylate in radiation curable PSA compositions can be enhanced by alkoxylating the tetrahydrofurfuryl acrylate. Further, the consistency in PSA performance using tetrahydrofurfuryl acrylate can be achieved by increasing the amount of tetrahydrofurfuryl acrylate relative to the polyester in the radiation curable composition.

While the foregoing description represents exemplary embodiments of the present disclosure, it will be understood that various additions, modifications and substitutions may be made therein without departing from the spirit and scope and range of equivalents of the accompanying claims.

## Claims

1. A pressure sensitive adhesive comprising:
a) a saturated amorphous polyester comprising a reaction product of a linear aliphatic diol and a mixture of acid components;
b) a mono-functional acrylate compound; and
c) a photoinitiator
wherein the acid components comprise an aliphatic component and an aromatic component, wherein the aliphatic component comprises an aliphatic dicarboxylic acid, and the aromatic component comprises an aromatic dicarboxylic acid or an anhydride thereof.

2. The pressure sensitive adhesive composition of claim 1, wherein the saturated amorphous polyester and the acrylate compound are present in a weight ratio ranging from about 1:1 to about 1:9.

3. The pressure sensitive adhesive composition of any forgoing claim, wherein the saturated amorphous polyester and the acrylate compound are present in a weight ratio ranging from about 1:4 to about 1:9.

4. The pressure sensitive adhesive composition of any forgoing claim, wherein the mixture of the acid components is present in a stoichiometric excess relative to the linear aliphatic diol, resulting in the saturated amorphous polyester being acid-terminated.

5. The pressure sensitive adhesive composition of any forgoing claim, wherein the aromatic dicarboxylic acid is selected from the group consisting of isophthalic acid, phthalic acid, terephthalic acid, anhydrides thereof, and mixtures thereof, and the aliphatic dicarboxylic acid is selected from the group consisting of adipic acid, azelaic acid, sebacic acid, succinic acid, and mixtures thereof.

6. The pressure sensitive adhesive composition of any forgoing claim, wherein the linear aliphatic diol is selected from the group consisting of ethylene glycol, 1,3-propanediol, 1,4-butanediol, and mixtures thereof.

7. The pressure sensitive adhesive composition of any forgoing claim, wherein the mono-functional acrylate compound is aromatic and selected from the group consisting of 2-phenoxyethyl acrylate; 2-phenoxyethyl methylacrylate; 2-phenoxyethyl ethylacrylate; alkoxylated phenol acrylate; alkoxylated phenol methylacrylate; alkoxylated phenol ethylacrylate; alkoxylated nonylphenol acrylate; alkoxylated nonylphenol methylacrylate; alkoxylated nonylphenol ethylacrylate, and mixtures thereof.

8. The pressure sensitive adhesive composition according to any one of claims 1 to 6, wherein the mono-functional acrylate compound is aliphatic and selected from the group consisting of tridecyl acrylate; tridecyl methylacrylate; tridecyl ethylacrylate; alkoxylated tetrahydrofurfuryl acrylate; alkoxylated tetrahydrofurfuryl methylacrylate; alkoxylated tetrahydrofurfuryl ethylacrylate and mixtures thereof.

9. The pressure sensitive adhesive composition of any forgoing claim, wherein the mono-functional acrylate compound is an alkoxylated acrylate that has been alkoxylated with ethylene oxide (EO) at a degree of alkoxylation ranging from about 3 to about 4.

10. The pressure sensitive adhesive composition of any forgoing claim, wherein the aliphatic dicarboxylic acid is present relative to the aromatic dicarboxylic acid or the anhydride thereof in a weight ratio ranging from about 1:1 to about 1:10.

11. The pressure sensitive adhesive composition of any forgoing claim, wherein the saturated amorphous polyester and the mono-functional acrylate compound comprise between about 80 wt.% to about 95 wt.% of the pressure sensitive adhesive.

12. A process for forming a laminate structure comprising:
a) applying a composition to a first layer, the composition comprising
i. a polyester;
ii. an (alkyl)acrylate functional compound; and
iii. a photoinitiator;
b) exposing the composition to a first UV radiation, causing the composition to become a pressure sensitive adhesive;
c) laminating a second layer to the first layer and the pressure sensitive adhesive, forming a laminate structure; and
d) exposing the laminate structure to a second UV radiation, fully curing the pressure sensitive adhesive and permanently bonding the second layer to the substrate.

13. The process of claim 12, wherein the first UV radiation includes UVA radiation ranging from about 0.4 J/cm² to about 1.1 J/cm².

14. The process of claims 12 or 13, wherein the first layer is a linoleum or PVC substrate and the second layer is a wear layer.

15. The process according to any one of claims 12 to 14, wherein the pressure sensitive adhesive in step c) adheres the wear layer to the substrate without permanently bonding the wear layer to the substrate.
